(19) Europäisches Patentamt

European Patent Office

Office européen des brevets

(11) Publication number: **0 664 299 A1**

## EUROPEAN PATENT APPLICATION

(21) Application number: **93202933.3**

(22) Date of filing: **20.10.93**

(51) Int. Cl.6: **C08B 37/00**, C08B 37/18, C08B 30/18, A23L 1/308

(43) Date of publication of application:
**26.07.95 Bulletin 95/30**

(84) Designated Contracting States:
**AT BE CH DE DK ES FR GB GR IE IT LI LU MC NL PT SE**

(71) Applicant: **UNILEVER N.V.**
**P.O. Box 760**
**NL-3000 DK Rotterdam (NL)**

(72) Inventor: **Plug, Johannes Petrus M., c/o**
**Unilever Research**
**Vlaardingen Lab.,**
**Olivier van Noortlaan 120**
**NL-3133 AT Vlaardingen (NL)**

(74) Representative: **Joppe, Hermina L. P. et al**
**Unilever N.V.**
**Patent Division**
**P.O. Box 137**
**NL-3130 AC Vlaardingen (NL)**

(54) **Oligosaccharides and their use as food ingredients.**

(57) Oligosaccharose material wherein the amount of hexanal is less than 0.100 ppm and/or the amount of trans-2 pentanal is less than 0.800 ppm and/or the amount of heptanal is less than 2.300 ppm based on the weight of oligosaccharose material.

EP 0 664 299 A1

The present invention relates to polysaccharides, in particular to ingredients of the oligosaccharose type e.g. oligofructoses.

Polysaccharides, especially of the oligosaccharose type are desirable ingredients of foods, since they contribute to health of the consumer. Examples of soluble fibre ingredients of the oligosaccharose type are oligofructoses e.g. as described in EP 532,775 or oligoglucoses as described in EP 535 627.

A first problem with ingredients of the oligosaccharose type is that they often are too sweet. This sweetness is believed to be caused by the short chain molecules in the mixture of oligosaccharose molecules. In particular the mono- and disaccharides contribute to the sweetness of the product.

Several solutions to this sweetness problem have been proposed, e.g. fractionation, addition of other sweetener materials at low levels and the addition of low levels of fat.

Another problem with the use of oligosaccharose materials is their bitter and/or metallic off-taste and/or off-flavour. This bitter and/or metallic off-taste and/or off-flavour becomes especially apparent when the sweetness of the oligosaccharose is surpressed. In other circumstances, however the bitter and/or metallic off-taste and/or off-flavour can also be noted.

It is an object of the invention to reduce the bitter and/or metallic off-taste and/or off-flavour of oligosaccharose materials. It has now been found that this can be achieved by solvent extraction. Ingredients which have been subjected to solvent extraction can be recognised by their reduced levels of hexanal, trans-2 pentanal and hexanal.

Accordingly, in a first embodiment, the invention relates to oligosaccharose materials wherein the amount of hexanal is less than 0.120 ppm and/or the amount of trans-2 pentanal is less than 0.800 ppm and/or the amount of heptanal is less than 2.300 ppm based on the weight of oligosaccharose materials.

The reduction of the content of hexanal, trans-2 pentanal and heptenal can suitably be accomplished by solvent extraction. This solvent extraction should preferably be done with a food-grade solvent which is less polar than water. Especially suitable for this purpose are C(1-12) primary and secondary alcohols, more preferred C2-C5 alcohols, most preferred is the use of ethanol or isopropanol.

Oligosaccharose materials which have been subjected to such a solvent extraction are generally characterised by the presence of traces of the extraction solvent. Generally the level of extraction solvent will be higher than the level of hexanal, trans-2 pentanal and heptanal.

Accordingly a second embodiment of the invention relates to oligosaccharose materials wherein the weight ratio of food grade solvents to hexanal and/or trans-2 pentanal and/or heptanal is more than 1 : 1, more preferred more than 5 : 1, most preferred from 20 : 1 to 1000 : 1. Generally the level of food grade solvents like ethanol or isopropanol is more than 50 ppm based on the weight of the oligosaccharose, more general more than 100 ppm, for example 250 to 2500 ppm. Oligosaccharoses which have not been subjected to solvent extraction generally have a level of solvents which is below 1 ppm, more general below 0.1 ppm or even below 0.01 ppm.

Preferred oligosaccharoses according to the invention are oligofructoses.

EP 532,775 (Ajinimoto Co. Ltd.) discloses the use of polyfructan as a fat or oil substitute in food products. Preferred polyfructans are low caloric polysaccharides of the inulin type, which are mainly composed of beta-2,1-bonds).

The oligofructose employed may not only contain fructose units in the chain and as terminal group, but also minor amounts of other monosaccharide units such as those e.g. derived from glucose. Also the oligofructose is preferably of the beta-2,1 type, more specifically it is inulin which may be obtained from plants such as e.g. Compositae species and fructans obtained from various micro-organisms as e.g. Aspergillus sydowii. Other suitable oligofructoses are e.g. irisin and lycorisin.

Polysaccharoses of the Inulin type are preferably derived from Jerusalem artichoke or chiciry. Suitable materials are for example marketed under the trade name Raftiline™ and Fibruline™.

Another suitable oligosaccharose is a oligoglucose, for example an indegestible dextrin containing 1-4 links between the glucose units. EP 535 627 describes such indigestible dextrins.

The invention is most suitably applied to oligosaccharoses having an average degree of polymerisation of more than 5, more preferred 6 to 100, most preferred 8 to 60.

For the purpose of the invention the DP (degree of polymerisation) value is defined as the weight average number of sugar units per oligosaccharose molecule. The DP value can thus be calculated by the following formula:

$$DP = a_n \cdot n$$

Wherein n is the number of sugar units per molecule and $a_n$ is the weight fraction of said molecule.

Improved oligosaccharoses in accordance to the invention may suitably be used in food products. Examples of foodstuffs in which the materials may be used, are spreads, for example margarines, halvarines or zero- or extremely low fat spreads (which contain less than about 20 % of fat), dressings, i.e. spoonable or pourable dressings e.g. dressings of the mayonnaise-type, dairy and non-dairy creams, processed cheese, pâtés, semi-hard cheese, sauces, pastry-margarines. Preferred food products are ready to eat food products. Also preferred are food products packed in portions of 1-5000 g, for example 10-1000 g, for example in tubs, bottles, wrappers, boxes etc.

The level of oligosaccharose materials in food products is preferably from 0.1 to 95 wt%, more preferred 5 to 60 wt %, most preferred 15 to 45 wt%. Again the presence of improved oligosaccharose materials in food products can be evidenced by low levels of hexanal and/or trans-2 pentanal and/or heptanal. Also a high weight ratio of food-grade solvent to these materials is a good sign that solvent extraction has taken place. The preferred ratios and levels as described above apply to food products.

In a preferred embodiment of the invention, the improved oligosaccharoses are used in food products containing biopolymer materials. Suitable biopolymer materials (excluding oligosaccharoses as defined above) are for example other carbohydrates (for example starches or gums) and proteins, some of which are more fully disclosed in EP-A-237 120, which is hereby incorporated by reference. Examples of such very suitable biopolymer materials are, gelatin, soy protein, milk protein, xanthan gum, carrageen, pectin, locust bean gum, (modified) starches (for example Paselli SA2, a modified starch ex AVEBE and N-oil) and microcrystalline cellulose.

The amount of biopolymer in compositions of the invention is dependent on the desired degree of thickening or gelling and the presence of other ingredients in the composition. Usually the amount of biopolymer lies between 0.05 and 30%, mostly between 0.1 and 25% based on the weight of the product. If modified starch is present as the sole biopolymer material, the level is preferably from 5-20%, if used in combination with other biopolymer material their level is preferably lower, for example 0.5 to 10 wt%. If other carbohydrates, for example gums are used, their level if preferably from 0.05 to 5 wt%. If gelling proteins, preferably gelatin, are used, their level is preferably from 0.5 to 10 wt%.

Although food products of the invention may contain high levels of fat, for example up to 80 wt%, for example from 10 to 60 wt%, in one preferred embodiment of the invention, food products containing the improved oligosaccharose according to the invention comprise less than 20 wt% of fat, more preferred from 0 to 10%, most preferred these food products are substantially free from fat or contain very low levels of fat (say from 0.01 to 2 wt%). Suitable edible triglyceride materials are for example disclosed in Bailey's Industrial Oil and Fat Products, 1979. The use of highly unsaturated oils such as sunflower oil, soy bean oil or corn oil without added "hardstock" is preferred. For the purpose of the invention the term fat also includes other, especially non-digestible, fatty materials, for example sucrose fatty acid polyesters, which may be used as a replacement for part or all of the triglyceride material.

Food products in accordance with the invention may optionally further comprise any of the conventional food ingredients such as salt, acids, spices, bulking agents, flavouring materials, colouring materials, preserving agents and vegetable particles etc. The use of improved oligosaccharose of the invention, is however especially preferred in non-sweet food products. Non sweetness may for example be accomplished by reducing the amount of mono- and disaccharides and/or by addition of a sweetness suppressant e.g. Cypha (TM) ex Tate and Lyle.

Generally the balance of compositions of the invention will be water. The level of water may for example be from 10 to 90 wt%, for example more than 50 wt%, such as more than 60 wt% or even more than 70 wt%.

Food products according to the present invention may have improved rheological properties and at least one of the less favourable tendencies mentioned above is improved, in particular the tendency of losing structure upon shearing. These advantages are particularly apparent when relatively high levels of oligosaccharoses are used (say 10 to 60 wt% based on the food product); more preferably these levels are used in combination with biopolymer materials.

Improved oligosaccharoses in accordance to the invention are preferably prepared by solvent extraction. Preferably a food-grade solvent as described hereabove is used, more preferably an edible alcohol, most preferably ethanol or isopropylalcohol. The extraction can be carried out by any suitable method e.g. the contacting of the oligosaccharose material with the solvent in a weight ratio of more than 1 : 0.5, more preferably more than 1 : 1, more preferably 1 : 2 to 1 : 100. The temperature of extraction will generally be from 0 to 80 °C, more general 5 to 50 °C.

The invention is illustrated by the following examples. In the examples unless specified otherwise, all percentages and parts are based on weight.

Example 1

A fat free spread was prepared from the following ingredients:

30.0 parts inulin (improved Raftiline LS ex Tiense)

1.5 parts NaCl

0.12 parts potassium sorbate

0.05 parts β-carotene (1% water soluble solution)

1 part gelatin, 250 bloom (ex Geltech)

35 ppm Cypha (ex Tate & Lyle) up to 100 parts water

The Raftiline was pretreated by ethanol extraction at ambient temperature (weight ratio ethanol to inulin 1:1), followed by removal of the ethanol.

All the ingredients were mixed together with the exception of inulin and then added to cold water. When the ingredients were completely dissolved the inulin was added slowly to the solution. The suspension was then mixed for 5 minutes with a high energy mixer [Ultra turrax (trade name) type TP 18/10]. During the mixing the pH was adjusted to 4.7 by adding a small amount of lactic acid.

The mixture so obtained was filled in tubs, which were immediately stored in a refrigerator at 5°C. After one week storing the product was tested.

The level of hexanal, trans-2 pentanal, heptanal and ethanol were determined by using dynamic head space chromotography (Tekmar-device). The level of hexanal on product was 0.03 ppm (0.1 ppm on inulin), the level of trans-2 pentanal was 0.125 ppm (0.42 ppm on inulin), the level of heptanal was 0.556 ppm (1.85 ppm on inulin). The ethanol level was about 500 ppm on product (about 1700 on inulin).

For comparison the same spread was prepared with untreated Raftiline. The hexanal level was 0.044 ppm (0.15 on inulin), the trans-2 pentanal level was 0.311 ppm (1.04 ppm on inulin), the heptanal level was 0.805 ppm (2.68 ppm on inulin). No ethanol could be detected.

The product with the improved Raftiline had a distinct better taste (less bitter/less metallic/less off-flavour)

Example 2

A fat free mayonaise can be prepared from the following ingredients:

27.5 parts inulin (see Example I)

1.5 parts NaCl

8 parts vinegar

0.12 parts potassium sorbate

0.05 parts β-carotene (1% water soluble solution)

0.3 parts xanthan gum

40 ppm Cypha (ex Tate & Lyle) up to 100 parts water

Similar taste benefits can be obtained by using the solvent extracted inulin.

**Claims**

1. Oligosaccharose material wherein the amount of hexanal is less than 0.120 ppm and/or the amount of trans-2 pentanal is less than 0.800 ppm and/or the amount of heptanal is less than 2.300 ppm based on the weight of oligosaccharose material.

2. Oligosaccharose material wherein the weight ratio of food grade solvents to hexanal and/or trans-2 pentanal and/or heptanal is more than 1 : 1.

3. Oligosaccharose material according to claim 2, wherein the food grade solvent is a C(1-12) primary or secondary alcohol, more prefered C(2-5) primary or secondary alcohol, most preferred ethanol or isopropanol.

4. Oligosaccharose according to one or more of the preceding claims, being and oligofructose or an oligoglucose, preferably inulin.

5. Food product comprising 0.1 to 95 wt% of an oligosaccharose material according to one or more of the preceding claims.

6. Food product according to claim 5, selected from the group of spreads, dressings, dairy and non-dairy creams, processed cheese, pâtés, semi-hard cheese, sauces and pastry-margarines.

7. Method of preparing an oligosaccharose according to one or more of the claims 1-4, comprising the extraction of oligosaccharose with a food grade solvent.

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X<br>Y | US-A-1 616 164 (W. C. ARSEM)<br><br>* page 1, line 85 - line 103 *<br>* page 2, line 61 - line 72 *<br>* page 3, line 72 - line 79 *<br>* claim 7 *<br>--- | 1,4,7<br>5,6 | C08B37/00<br>C08B37/18<br>C08B30/18<br>A23L1/308 |
| D,Y | EP-A-0 532 775 (AJINOMOTO CO.)<br>* claims *<br>--- | 5,6 | |
| X | US-A-2 450 717 (H. W. COLES)<br>* column 2, line 6 - line 15 *<br>--- | 1,4,7 | |
| A | EP-A-0 289 461 (WARNER-LAMBERT COMPANY)<br>* page 3, line 56 - page 4, line 7 *<br>----- | 1,7 | |
| | | | TECHNICAL FIELDS SEARCHED (Int.Cl.6)<br><br>C08B<br>A23L |

The present search report has been drawn up for all claims

| Place of search | Date of completion of the search | Examiner |
|---|---|---|
| THE HAGUE | 22 February 1994 | Mazet, J-F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)